# EUROPÄISCHE PATENTSCHRIFT

(11) **EP 0 794 336 B1**
(45) Veröffentlichungstag und Bekanntmachung des Hinweises auf die Patenterteilung: **21.04.1999**
(21) Anmeldenummer: 97810019.6
(22) Anmeldetag: 15.01.1997
(51) Int. Cl.: F16B 13/14, E21D 20/02

(54) **Ankerstange für Verbundanker**
Anchoring bar for compound anchor
Barre d'ancrage pour dispositif d'ancrage composite

(30) Priorität: 07.03.1996 DE 19608859
(43) Veröffentlichungstag der Anmeldung: 10.09.1997
(73) Patentinhaber: HILTI Aktiengesellschaft, 9494 Schaan (LI)
(72) Erfinder: Schiefer, Erwin, 81375 München (DE); Popp, Franz, 86807 Buchloe (DE)
(74) Vertreter: Wildi, Roland

(56) Entgegenhaltungen:
- DE-A- 4 137 090
- US-A- 4 518 290
- US-A- 4 564 315
- US-A- 4 642 964

## Beschreibung

Die Erfindung betrifft eine Ankerstange für Verbundanker, die mittels einer aushärtbaren anorganischen und/oder organischen Mörtelmasse in einer Aufnahmebohrung befestigt werden, gemäss dem Oberbegriff des Patentanspruchs 1 siehe z.B. DE-A-4 137 090.

Für die Erstellung von weitgehend spreizdruckfreien Befestigungen haben sich zwei Verankerungsmethoden bewährt. Die eine besteht darin, einen Anker mit ausstellbaren Segmenten in einer Hinterschneidung am Grund der Aufnahmebohrung zu befestigen. Die Segmente werden in den Bereich der Hinterschneidung ausgeklappt und halten den Anker axial durch Formschluss mit der Hinterschneidung. Die Befestigungsmethode ist relativ aufwendig. Zuerst muss eine Aufnahmebohrung erstellt werden und danach mittels eines speziellen Werkzeugs in einer vorbestimmten Tiefe der Aufnahmebohrung ein Hinterschnitt erzeugt werden. Erst dann kann der Anker in die Aufnahmebohrung eingesetzt werden. Das Ausklappen der Haltesegmente erfolgt beispielsweise durch das axiale Einziehen oder Ausdrücken eines Konus. Die Befestigung ist je nach Winkel der Bohrlochwandung im Übergang zur Hinterschneidung weitgehend spreizdruckfrei.

Eine einfachere Methode zur Erstellung spreizdruckfreier Verankerungen besteht darin, eine Ankerstange mit Hilfe einer aushärtbaren organischen und/oder anorganischen Mörtelmasse in der Aufnahmebohrung zu befestigen. Zu diesem Zweck wird nach der Erstellung der Aufnahmebohrung die Mörtelmasse in die Aufnahmebohrung eingefüllt. In der Regel handelt es sich bei den verwendeten Mörtelmassen um mehrkomponentige Systeme mit Reaktivkomponenten und Zuschlagstoffen, die getrennt voneinander aufbewahrt werden müssen. Die Härtungsreaktion wird erst bei Kontakt und Vermischung der Komponenten miteinander innerhalb der Aufnahmebohrung ausgelöst. Die miteinander reagierenden Komponenten der Mörtelmasse liegen beispielsweise in Glasampullen oder in Beuteln getrennt voneinander vor und werden in die Aufnahmebohrung eingeschoben. Durch das anschliessende Einbringen der Ankerstange werden die Glasampullen bzw. die Beutel aufgebrochen, und die Komponenten kommen miteinander in Kontakt. Für die Festigkeit des Verbundmörtels und für die Erzielung möglichst hoher Auszugswerte ist es wichtig, dass die Komponenten der Mörtelmasse innig miteinander vermischt werden. Deshalb wird die Ankerstange beim Einbringen in die Aufnahmebohrung üblicherweise um Ihre Längsachse rotiert. Gewindeartige Profilierungen im Verankerungsbereich der Ankerstange sollen die Durchmischung der Komponenten verbessem.

Während mit den bekannten Ankerstangengeometrien in der Regel eine ausreichende Durchmischung der Komponenten erzielt werden kann, besteht doch der Wunsch, die Durchmischung noch weiter zu verbessern. Die Komponenten der Mörtelmasse sollen sich nicht weitgehend unvermischt am Grund der Aufnahmebohrung absetzen. Zugleich soll die Mörtelmasse während des Mischvorgangs am Austreten aus der Aufnahmebohrung gehindert werden. Die Komponenten der Mörtelmasse sollen im Verankerungsbereich der Ankerstange konzentriert sein und dort bestens durchmischt werden. Der rückwärtige Abschnitt der Ankerstange, der mit Mitteln für den Lastangriff, beispielsweise einem Aussengewinde, versehen ist, soll frei von der Mörtelmasse bleiben. Die Befestigung der Ankerstange soll in einem Schritt erfolgen können und keinen Einsatz zusätzlicher Hilfsmittel erfordern.

Die Lösung dieser teils widersprüchlichen Aufgaben besteht in einer Ankerstange, welche die im kennzeichnenden Abschnitt des Patentanspruchs 1 angeführten Merkmale aufweist. Insbesondere wird durch die Erfindung eine Ankerstange für Verbundanker geschaffen, die mittels einer aushärtbaren organischen und/oder anorganischen Mörtelmasse in einer Aufnahmebohrung befestigt werden und an ihrem rückwärtigen Abschnitt Mittel für den Lastangriff aufweist. Der Verankerungsbereich der Ankerstange, der in die Aufnahmebohrung einsetzbar ist, besitzt eine gewindeartige Profilierung, die mit der in die Aufnahmebohrung eingefüllten organischen und/oder anorganischen Verbundmasse wechselwirkt. Die gewindeartige Profilierung ist ein Grobgewinde und weist eine Gewindesteigung auf, die sich vom in Setzrichtung vorderen Endbereich der Ankerstange zum rückwärtigen Abschnitt verringert.

Durch die erfindungsgemässe Ausbildung der gewindeartigen Profilierung mit vom vorderen Ende der Ankerstange zum rückwärtigen Abschnitt abnehmender Gewindesteigung werden insbesondere die widersprüchlichen Aufgaben gelöst, die Mörtelmasse einerseits vom Grund der Aufnahmebohrung zu fördern, über den Verankerungsbereich zu verteilen und dort die Komponenten der Mörtelmasse innig zu durchmischen und andererseits ein Austreten der Mörtelmasse aus der Aufnahmebohrung zu verhindern und die Mörtelmasse im Verankerungsbereich zu konzentrieren. Der in Setzrichtung vordere Bereich der Ankerstange weist für die Förderung und Durchmischung der Komponenten der Mörtelmasse eine relativ grosse Gewindesteigung auf. Die Gewindesteigung nimmt zum rückwärtigen Abschnitt mit den Lastangriffsmitteln ab. Dadurch entsteht eine Komprimierungszone für die Mörtelmasse, die ein ungewolltes Austreten der Mörtelmasse aus der Aufnahmebohrung verhindert. Dadurch wird die Mörtelmasse, wie beabsichtigt, im Verankerungsbereich konzentriert. Der Setzvorgang der Ankerstange erfolgt auf bekannte Weise in einem Schritt durch rotierendes Einbringen in die Aufnahmebohrung. Die axiale Rotation der Ankerstange wird dabei auf bekannte Weise mit Hilfe einer Drehbohrmaschine erzeugt. Zusätzliche Hilfsmittel, die beispielsweise die Aufnahmebohrung zur Oberfläche hin abschliessen, sind nicht erforderlich.

In einer Variante der Erfindung verringert sich die Gewindesteigung des Grobgewindes über die Längserstreckung der Ankerstange abschnittweise. Auf diese Weise ausgebildet, besitzt die Ankerstange mehrere hintereinander angeordnete Zonen mit einheitlicher Gewindesteigung. Die Zone mit der grössten Gewindesteigung stellt den Förderbereich dar. Die an den rückwärtigen Abschnitt mit den Lastangriffsmitteln angrenzende Zone mit der geringsten Gewindesteigung bildet den Komprimierungsbereich, der das Austreten der Mörtelmasse aus der Aufnahmebohrung unterbindet. Dazwischen befindet sich wenigstens ein Übergangsbereich, in dem die Gewindesteigung kleiner ist als im vorderen Abschnitt, aber grosser als im hinteren Abschnitt.

Für die Herstellung der Ankerstange erweist es sich als zweckmässig, wenn sich die Gewindesteigung vom vorderen Endbereich zum rückwärtigen Abschnitt stetig verringert. Auch in diesem Fall ergeben sich unterschiedliche Bereiche, bloss sind die Übergänge zwischen den Bereichen nicht scharf getrennt, sondern verlaufen fliessend.

Die Gewindesteigung des Grobgewindes ist in dem an den rückwärtigen Abschnitt angrenzenden Bereich im wesentlichen gleich Null. Dadurch ist im rückwärtigen Komprimierbereich auch die theoretische Möglichkeit einer Massenförderung unterbunden.

Die Lösung der Aufgaben, die der Erfindung zugrunde liegen, wird dadurch unterstützt, dass das Grobgewinde eine radiale Gewindetiefe aufweist, die sich vom in Setzrichtung vorderen Endbereich der Ankerstange zum rückwärtigen Abschnitt verringert. Im Bereich mit grosser radialer Gewindetiefe wird die Förderung und Durchmischung der Komponenten der Mörtelmasse unterstützt. Im Komprimierbereich unterstützt die sich verringernde radiale Gewindetiefe den Komprimiervorgang und unterbindet die Massenförderung zur Oberfläche des Untergrundes.

Die radiale Gewindetiefe kann sich abschnittweise oder kontinuierlich verringern. Die abschnittweise Verringerung ist mit Vorteil, aber nicht notwendigerweise, mit einer abschnittweisen Verringerung der Gewindesteigung gekoppelt und unterstützt die Zonenbildung an der Ankerstange und bei der Durchmischung der Komponenten der Mörtelmasse. Fertigungstechnisch einfacher herzustellen ist eine Ankerstange, deren radiale Gewindetiefe sich vom vorderen Endbereich zum rückwärtigen Abschnitt stetig verringert und im an den rückwärtigen Abschnitt angrenzenden Komprimierungsbereich im wesentlichen gleich Null ist. Wie im Fall der sich stetig verringernden Gewindesteigung ergeben sich fliessende Übergange zwischen den einzelnen Zonen. Die im Komprimierungsbereich auf Null absinkende radiale Gewindetiefe sorgt für einen zuverlässigen Abbruch der Förderwirkung der gewindeartigen Profilierung.

Für die Zerstörung der Gebinde, in denen die Komponenten der Mörtelmasse getrennt voneinander untergebracht sind, erweist es sich als vorteilhaft, wenn der vordere Endbereich der Ankerstange mit einem Kopfteil verbunden ist, welches eine keilartige Spitze aufweist.

Um zu verhindern, dass die Ankerstange sich mit der Mörtelmasse verbindet und um gegebenenfalls ein Nachspreizen der Ankerstange in einem sich öffnenden Riss zu ermöglichen, kann der Verankerungsbereich der Ankerstange mit einer Ummantelung versehen sein. Die Ummantelung ist vorzugsweise eine Kunststoffhülse oder ein Schrumpfschlauch, welche den Verankerungsbereich der Ankerstange umgibt.

Während im Fall einer Ummantelung des Verankerungsbereichs der Ankerstange sowohl der Verankerungsbereich als auch die Ummantelung mit dem erfindungsgemäss zum rückwärtigen Ende verlaufenden Grobgewinde ausgestattet sein können, erweist es sich aus fertigungstechnischen Gründen als vorteilhaft, das Grobgewinde nur an der Ummantelung vorzusehen. Während im Fall der Profilierung der Ankerstange selbst relativ aufwendige Metallumformvorgänge erforderlich sind, kann das erfindungsgemässe Grobgewinde an der Kunststoffummantelung sehr einfach in massentechnischen Formgebungprozessen, beispielsweise durch Spritzgiessen der Ummantelung, hergestellt werden.

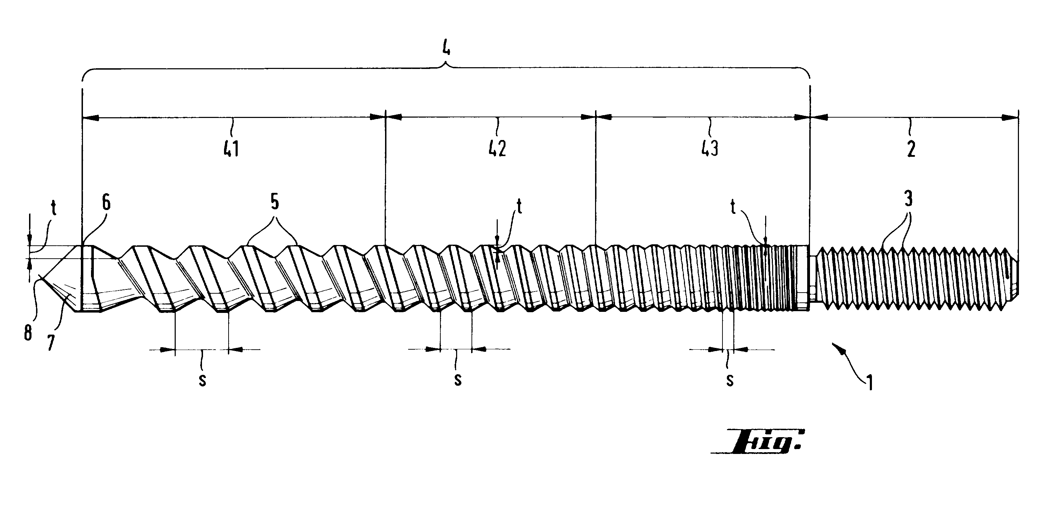

Im folgenden wird die Erfindung unter Bezugnahme auf ein in der schematischen Zeichnung dargestelltes Ausführungsbeispiel näher erläutert. In der einzigen Figur ist eine erfindungsgemässe Ankerstange dargestellt und gesamthaft mit dem Bezugszeichen 1 versehen. Die Ankerstange 1 weist an ihrem rückwärtigen Abschnitt 2 ein Aussengewinde 3 auf, welches als Mittel für den Lastangriff dient. Der Verankerungsbereich 4 der Ankerstange 1 ist mit einer gewindeartigen Profilierung 5 versehen. Insbesondere handelt es sich um ein Grobgewinde mit in der Projektion etwa sägezahnartiger Kontur. An ihrem in Setzrichtung vorderen Ende 6 schliesst an den Verankerungsbereich 4 ein Kopfteil 7 an, welches eine keilartige Spitze 8 aufweist. Die keilartige Spitze 7 dient beim rotierenden Einbringen der Ankerstange in die Aufnahmebohrung dem Zerstören der Glasampullen bzw. Kunststoffbeutel, in denen die miteinander reagierenden Komponenten der organischen und/oder anorganischen Mörtelmasse getrennt voneinander aufbewahrt sind.

Das im Verankerungsbereich vorgesehene Grobgewinde 5 weist eine Gewindesteigung s auf, die sich vom vorderen Ende 6 zum rückwärtigen Abschnitt 2 verringert. Als Mass für die Gewindesteigung s wird dabei der Abstand benachbarter, radial gleicher Windungsbereiche verstanden. In dem dargestellten Ausführungsbeispiel verringert sich die Gewindesteigung s des Grobgewindes 5 kontinuierlich. Es versteht sich, dass die Gewindesteigung s auch abschnittweise konstant verlaufen kann, wobei die einzelnen Zonen, die sich vom vorderen Ende 6 zum rückwärtigen Abschnitt 2 der Ankerstange 1 aneinanderreihen, jeweils eine geringere Gewindesteigung 2 aufweisen. Aufgrund der über die Längserstreckung der Ankerstange 1 abnehmenden Gewindesteigung s ist der Verankerungsbereich 4 in verschiedene Bereiche unterteilt. Der vordere Teil 41 der Ankerstange 1 mit der grösseren Gewindesteigung s stellt einen Förderbereich für die Mörtelmasse dar. Der an den rückwärtigen Abschnitt 2 angrenzende Teil 43 der Ankerstange 1 bildet wegen der geringen bzw. gegen Null gehenden Gewindesteigung s einen Komprimierbereich für die Mörtelmasse. Der in der Fig. dargestellte dazwischen angeordnete Teil 42 des Verankerungsbereiches 4 bildet einen Übergangsbereich. Die grösste Gewindesteigung s beträgt vorzugsweise bis zum etwa 0,8-fachen des Durchmessers der Ankerstange im Verankerungsbereich während die Gewindesteigung s im Komprimierbereich 43 vorzugsweise auf Null abfällt.

Die Tiefe t des Grobgewindes 5 kann über die gesamte Gewindeausbildung konstant ausgebildet sein. Vorzugsweise ist das Grobgewinde, wie beispielsweise in der Fig. dargestellt, mit einer Gewindetiefe t versehen, die sich vom vorderen Ende des Verankerungsbereichs 4 zur rückwärtigen Abschnitt 2 verringert. Dabei kann die Gewindetiefe t abschnittweise konstant sein, wobei die Abschnitte gleichmässiger Gewindetiefe t mit Vorteil mit den Zonen gleichmässiger Gewindesteigung s übereinstimmen. Die Gewindetiefe t kann auch kontinuierlich bis auf Null abnehmen, wie in der Fig. angedeutet. Die grösste Gewindetiefe t beträgt dabei bis zum etwa 0,3-fachen des Durchmessers der Ankerstange im Verankerungsbereich.

Das Grobgewinde 5 im Verankerungsbereich 4 der Ankerstange 1 kann direkt am Mantel der Ankerstange 1 ausgebildet sein. Um ein Nachspreizen in einem sich öffnenden Riss zu ermöglichen, kann die Ankerstange 1 mit einer Ummantelung versehen sein, die ein Verbinden der Mantelfläche der Ankerstange 1 mit der Mörtelmasse verhindert. Dazu kann die Ankerstange beispielsweise mit einer Beschichtung versehen sein, oder der Verankerungsbereich kann mit einem Schrumpfschlauch ummantelt sein. In beiden Fällen bleibt die gewindeartig profilierte Aussenkontur der Ankerstange erhalten. Vorzugsweise ist die Ummantelung von einer Kunststoffhülse gebildet. In diesem Fall kann das Grobgewinde auch nur am Aussenmantel der Kunststoffhülse ausgebildet sein, die über den Verankerungsbereich der Ankerhülse geschoben wird.

## Patentansprüche

1. Ankerstange für Verbundanker mit einem rückwärtigen Abschnitt (2), der Mittel (3) für den Lastangriff aufweist, und einem Verankerungsbereich (4), der in eine Aufnahmebohrung einsetzbar ist und eine gewindeartige Profilierung (5) besitzt, die mit einer in die Aufnahmebohrung eingefüllten organischen und/oder anorganischen Verbundmasse wechselwirkt, **dadurch gekennzeichnet,** dass die gewindeartige Profilierung (5) ein Grobgewinde ist, welches eine Gewindesteigung (s) aufweist, die sich vom in Setzrichtung vorderen Endbereich (6) der Ankerstange (1) zum rückwärtigen Abschnitt (2) verringert.

2. Ankerstange gemäss Anspruch 1, dadurch gekennzeichnet, dass sich die Gewindesteigung (s) des Grobgewindes (5) über die Längserstreckung der Ankerstange (1) abschnittweise verringert.

3. Ankerstange gemäss Anspruch 1, dadurch gekennzeichnet, dass sich die Gewindesteigung (s) vom vorderen Endbereich (6) zum rückwärtigen Abschnitt (2) stetig verringert.

4. Ankerstange nach einem der vorangehenden Ansprüche, dadurch gekennzeichnet, dass die Gewindesteigung (s) des Grobgewindes (5) im an den rückwärtigen Abschnitt (2) angrenzenden Bereich (43) im wesentlichen gleich Null ist.

5. Ankerstange nach einem der vorangehenden Ansprüche, dadurch gekennzeichnet, dass das Grobgewinde (5) eine radiale Gewindetiefe (t) aufweist, die sich vom in Setzrichtung vorderen Endbereich (6) zum rückwärtigen Abschnitt (2) verringert.

6. Ankerstange nach Anspruch 5, dadurch gekennzeichnet, dass sich die radiale Gewindetiefe (t) abschnittweise verringert.

7. Ankerstange nach Anspruch 5, dadurch gekennzeichnet, dass sich die radiale Gewindetiefe (t) vom vorderen Endbereich (6) zum rückwärtigen Abschnitt (2) stetig verringert und im an den rückwärtigen Abschnitt (2) angrenzenden Bereich (43) im wesentlichen gleich Null ist.

8. Ankerstange nach einem der vorangehenden Ansprüche, dadurch gekennzeichnet, dass der vordere Endbereich (6) mit einem Kopfteil (7) verbunden ist, welches eine keilartige Spitze (8) aufweist.

9. Ankerstange nach einem der vorangehenden Ansprüche, dadurch gekennzeichnet, dass der Verankerungsbereich (4) der Ankerstange (1) mit einer Ummantelung versehen ist.

10. Ankerstange nach Anspruch 9, dadurch gekennzeichnet, dass das Grobgewinde (5) nur an der Ummantelung vorgesehen ist.

## Claims

1. Anchor bar for compound anchor with a rearward section (2) comprising means (3) of a load application and an anchorage area (4), which is insertible into a receiving bore and which has a threadlike profile (5) which interacts with an organic and/or inorganic composite mass which is filled into the receiving bore, **characterised in that** the threadlike profile (5) is a coarse thread with a thread pitch (s) which reduces, as seen in the setting direction, from the front end area (6) of the anchor bar (1) towards the rear section (2).

2. Anchor bar according to Claim 1, **characterised in that** the thread pitch (s) of the coarse thread (5) reduces sectionally over the longitudinal extent of the anchor bar (1).

3. Anchor bar according to Claim 1, **characterised in that** the thread pitch (s) reduces continuously from the front end area (6) towards the rear section (2).

4. Anchor bar according to one of the above claims, **characterised in that** the thread pitch (s) of the coarse thread (5) in the area (43) adjacent the rear area (2) is essentially zero.

5. Anchor bar according to one of the above claims, **characterised in that** the coarse thread (5) comprises a radial thread depth (t) which reduces, as seen in the setting direction, from the front end area (6) towards the rear section (2).

6. Anchor bar according to Claim 5, **characterised in that** the radial thread depth (t) reduces sectionally.

7. Anchor bar according to Claim 5, **characterised in that** the radial thread depth (t) reduces continuously from the front end area (6) towards the rear section (2) and is in the area (43) adjacent the rear section (2) essentially zero.

8. Anchor bar according to one of the above claims, **characterised in that** the front end area (6) is connected to a head part (7) which has a wedgeshaped tip (8).

9. Anchor bar according to one of the above claims, **characterised in that** the anchorage area (4) of the anchor bar (1) is provided with a casing.

10. Anchor bar according to Claim 9, **characterised in that** the coarse thread (5) is only provided at the casing.

## Revendications

1. Tige d'ancrage pour ancrage composite, comprenant une portion arrière (2), pourvue de moyens (3) pour appliquer des charges, et une zone d'ancrage (4) qui peut être introduite dans un trou récepteur et comporte un profilage fileté (5) et qui coopère avec une masse composite organique et/ou inorganique placée dans le trou récepteur, caractérisée en ce que le profilage fileté (5) est un filetage à pas gros possédant un pas de filetage (s) qui diminue de la zone extrême (6) de la tige d'ancrage (1), située à l'avant par rapport au sens d'enfoncement, vers la portion arrière (2).

2. Tige d'ancrage selon la revendication 1, caractérisée en ce que le pas de filetage (s) du filetage à pas gros (5) diminue par portions sur l'extension longitudinale de la tige d'ancrage (1).

3. Tige d'ancrage selon la revendication 1, caractérisée en ce que le pas de filetage (s) diminue régulièrement de la zone extrême avant (6) vers la portion arrière (2).

4. Tige d'ancrage selon une des revendications précédentes, caractérisée en ce que le pas de filetage (s) du filetage à pas gros (5) est sensiblement nul dans la zone (43) adjacente à la portion arrière (2).

5. Tige d'ancrage selon une des revendications précédentes, caractérisée en ce que le filetage à pas gros (5) présente une profondeur radiale de filet (t) qui diminue de la zone extrême (6), située à l'avant par rapport au sens d'enfoncement, vers la portion arrière (2).

6. Tige d'ancrage selon la revendication 5, caractérisée en ce que la profondeur radiale de filet (t) diminue par portions.

7. Tige d'ancrage selon la revendication 5, caractérisée en ce que la profondeur radiale de filet (t) diminue régulièrement de la zone extrême avant (6) vers la portion arrière (2) et est sensiblement nulle dans la zone (43) adjacente à la portion arrière (2).

8. Tige d'ancrage selon une des revendications précédentes, caractérisée en ce que la zone extrême avant (6) est reliée à une partie de tête (7) pourvue d'une pointe en forme de coin (8).

9. Tige d'ancrage selon une des revendications précédentes, caractérisée en ce que la zone d'ancrage (4) de la tige d'ancrage (1) est pourvue d'une gaine.

10. Tige d'ancrage selon la revendication 9, caractérisée en ce que le filetage à pas gros (5) n'est prévu qu'au niveau de la gaine.
